(19) Europäisches Patentamt

European Patent Office

Office européen des brevets

(11) **EP 0 755 744 B1**

(12) **EUROPEAN PATENT SPECIFICATION**

(45) Date of publication and mention of the grant of the patent:
**26.06.2002 Bulletin 2002/26**

(51) Int Cl.⁷: **B23D 47/04**

(21) Application number: **96103877.5**

(22) Date of filing: **12.03.1996**

(54) **Indicating device in a saw machine**

Anzeigeeinrichtung für eine Sägemaschine

Dispositif indicateur pour machine à scier

(84) Designated Contracting States:
**CH DE ES FR GB IT LI**

(30) Priority: **20.07.1995 JP 18448595**

(43) Date of publication of application:
**29.01.1997 Bulletin 1997/05**

(73) Proprietor: **Tsune Seiki Co., Ltd.**
**Nei-gun, Toyama-ken (JP)**

(72) Inventor: **Tsune, Ryoichi**
**Toyoma-shi, Toyoma-ken (JP)**

(74) Representative:
**Ritter und Edler von Fischern, Bernhard,**
**Dipl.-Ing.**
**Hoffmann Eitle,**
**Patent- und Rechtsanwälte,**
**Arabellastrasse 4**
**81925 München (DE)**

(56) References cited:
**US-A- 4 241 630        US-A- 5 060 547**

• **PATENT ABSTRACTS OF JAPAN vol. 009, no. 311 (M-436), 7 December 1985 & JP-A-60 146619 (AMADA:KK), 2 August 1985,**

**Description**

Field of the Invention

The present invention relates to an indicating device indicative of a cutting-off length of a work stock and the like in a saw machine which comprises a work stock carriage adapted for carrying forwardly a work stock partially by a predetermined distance over a crosswise cutting course of a saw blade whereby a forwarded part of the work stock is cut by the saw blade.

Background and Summary of the Invention

In this type saw blade machine, the work stock carriage includes a carrier-combined vice mounted on a platform, and is so constructed that the platform is moved to and from between a frontmost position ( near to the cutting course of the saw blade ) and a shiftable back position. That is, the work stock carriage is caused to move and thereby forwards the work stock by a distance between the frontmost and back positions. Particularly, while a forwarded part of the work stock held in a main vice is being cut by the saw blade, the work stock carriage is returned toward the back position in a state where the carrier-combined vice is loosened away from the work stock. Sequentially, after the cutting is finished, the work stock carriage is moved forwardly toward the frontmost position while holding the work stock, for preparation of a next cutting. In this case, the cutting-off length of the work stock corresponds to a measurement obtained by subtracting a saw blade thickness from the moving distance of the carrier-combined vice or the carriage. For example, where the moving distance is 100 mm and the saw blade thickness is 3 mm, the cutting-off length of the work stock is 100 mm - 3 mm = 97 mm.

In such a prior art saw blade machine, a desired cutting-off length of the part of the work stock is obtained through steps as follows; firstly, a back position of the work stock carriage is preliminarily set by placing a shiftable restricting stopper at any location, and then a forwarded part of the work stock is cut in test. Next, the numerical value of the length of the cut part of the work stock is measured and input to an indicating device on which the cutting-off length is indicated. Secondly, with reference to the indicated value, a final back position of the work stock carriage is secured by moving the stopper with a difference between the preliminarily cut length and a desired cutting-off length.

However, in a case of replacing with the saw blade having a different thickness, the actual cutting-off length is changed in the same setting. Therefore, for performing the cutting-off of the work stock with the same length, a location of the stopper must be changed. Particularly, in the prior art saw machine, the indicating device is still indicating the initial setting value without indicating a value of the new length of a forwarded part to be cut with the different saw blade. Therefore, a worker has to measure the actual cut-off length of the forwarded part of the work stock. Next, with reference to the measured value, a moving distance of the work stock carriage is calculated and then input to the indicating device. Accordingly, the location of the restricting stopper is changed.

Besides, a desired cutting-off length of the work stock is usually shorter than a maximum moving distance of the work stock carriage, but in a case where the desired cutting-off length is longer than the maximum moving distance of the work stock carriage, the work stock carriage has to be moved forwardly two or more times after being returned. In this case, a distance H of the carriage moved forwardly per one time becomes :

$$H = (L + T) / N$$

where L is a cutting-off length of the work stock, and T is the thickness of a saw blade, and N is a frequency of the forward movement of the work stock carriage.

In such a case, hitherto, the worker has to measure the moving distance H of the carriage moved forwardly per one time and then estimate from this equation the total cutting-off length L through the forward movement of the frequency N, and input its value to the indicating device for cutting operation.

US-A 4 241 630 discloses a cutting machine for subdividing material lengths. Especially, the cutting machine comprises a work stock carriage adapted for carrying forwardly a work stock partially by a predetermined distance over a crosswise cutting course of a saw blade whereby a forwarded part of the work stock is cut by the saw blade each time the work stock is forwarded. The saw machine or cutting machine includes an indicating device which comprises an identifying means for identifying a moving distance of the work stock carriage in between a foremost position and a shiftable back position.

PATENT ABSTRACTS OF JAPAN, vol.009, no.311(M-436) & JP-A-60 146619 discloses a material feed device mechanism in a cutter, wherein, for easily compensating a cutting margin, the frequency of a constant-feed is calculated in accordance with the comparison between a cut length and the maximum feed stroke of a material feed mechanism so that a back gauge stopper is moved back by a cutting margin upon one-time material feed before the final material feed.

Starting from the cutting machine disclosed in US-A 4 241 630, it is therefore an object of the present invention to provide an indicating device in a blade machine which can indicate automatically, without a need of a conventional calculation, a cutting-off length of the work stock which is changed according to the difference in a saw blade thickness when replacing with the saw blade having a different thickness, or a cutting-off length of the work stock when tile work stock carriage is moved forwardly two or more times where a desired cutting-off length of the work stock is longer than a maximum moving distance of the work stock carriage.

This object is solved by a device according to the claim.

Brief Description of the Drawings

Fig.1 is a plan view of a saw machine including an indicating device according to the present invention;
Fig.2 is an explanatory view for showing a driving system of a work stock carriage;
Fig.3 is a block diagram of the indicating device;
Fig.4 is plan view showing a panel of an operating unit of the indicating device; and
Fig.5 is a flow chart for showing operational processes of the indicating device.

Detailed Description of Preferred Embodiments

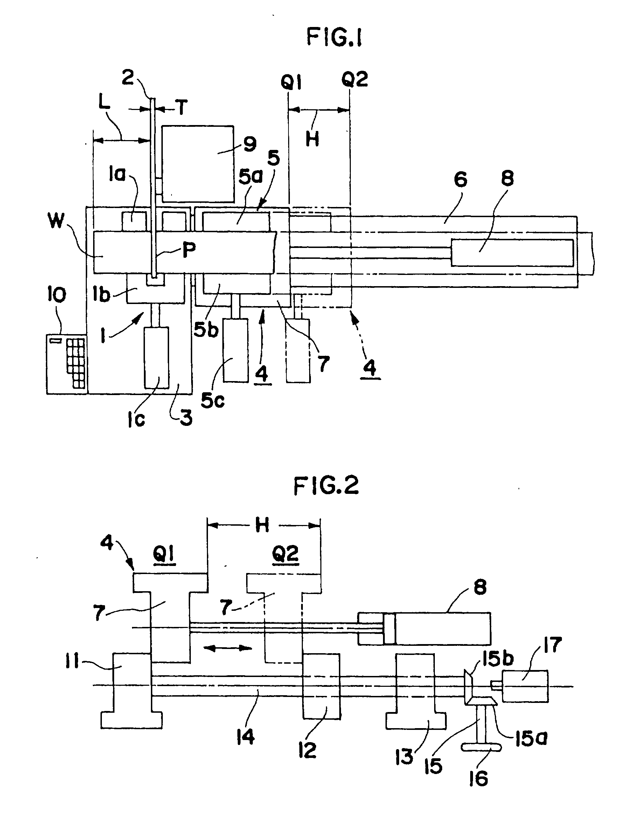

One embodiment of the present invention is described hereinafter in details with reference to the drawings. In Fig.1 showing schematically a saw machine, the numeral 1 designates a main vice adapted for holding a forwarded part of a work stock W at front and rear positions of a crosswise cutting course of a saw blade 2, which main vice comprises a fixed vice jaw 1a, a movable vice jaw 1b and a vice tight-loose operating hydraulic cylinder 1c for moving the movable vice jaw 1b relative to the fixed vice jaw 1a. The main vice 1 is disposed on a base 3. Numeral 4 designates a work stock carriage adapted to carry forwardly the work stock W, i.e. forward the work stock while holding it, which carriage comprises a carrier-combined vice 5, a platform 7 for sustaining the carrier-combined vice 5, and a hydraulic cylinder 8 for moving the platform 7 to and fro along a bench 6 between a frontmost position Q1 and a shiftable back position Q2. The carrier-combined vice 5 comprises a fixed vice jaw 5a, a movable vice jaw 5b and a vice tight-loose operating hydraulic cylinder 5c for moving the shiftable vice jaw 5b relative to the fixed vice jaw 5a. The saw blade 2 is, for example, of a circular saw blade, and is mounted on a saw blade frame 9 so as to advance toward and recede from the cutting position P. Numeral 10 designates an operating unit of an indicating device characterized by the present invention, which is disposed on the base 3.

In Fig.2 which shows a driving system of the work stock carriage 4, numeral 11 designates a fixed stopper for restricting the foremost position of the platform 7 and the carrier-combined vice 5 of the carriage 4, and numeral 12 designates a shiftable stopper for restricting the back position of the same, and numeral 13 designates a rearmost limiting stopper for restricting the shiftable stopper 12 to a rearmost limitation. Numeral 14 designates a screw shaft sustained rotatably by the fixed stopper 11 and the rearmost limiting stopper 13, while the shiftable stopper 12 is set onto the screw shaft 14. The shiftable stopper can be shifted along the screw shaft 14 which is rotated by turning manually a handle 16 integrated with a rotary shaft 15 which is connected to a rear end of the screw shaft 14 via bevel gears 15a, 15b. An encoder 17, associated with the screw shaft 14, is adapted to detect a rotation of the screw shaft 14 in relation to a position of the shiftable stopper 12, i.e. a position of the work stock carriage 4. A signal of such detection is sent to a processing means 20 whereby a moving distance H of the work stock carriage 4 is estimated and then indicated on displaying means 21.

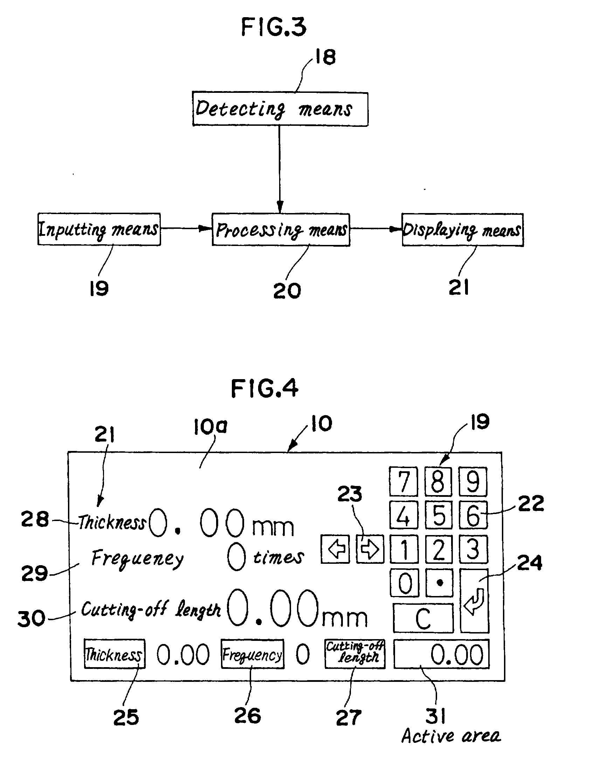

Next, with reference to Fig.3, the indicating device comprises an identifying means 18 for identifying the moving distance H of the work stock carriage 4 in between the foremost position and the hack position; an inputting means 19 for inputting numerical values of a thickness T of the saw blade 2 and a frequency N of the forward movement of the work stock carriage 4; a processing means 20 for calculating and estimating a cutting-off length L of the work stock, based on the detection of the forward movement of the work stock carriage 4, and based on the inputted values of the saw blade thickness T and the frequency N of the forward movement of the work stock; and a displaying means 21 for indicating the saw blade thickness T, the frequency N and the cutting-off length L estimated by the processing means 20. The processing means is comprised mainly by a microprocessor.

The identifying means 18 of the moving distance of the carriage 4 comprises the fixed stopper 11 for restricting the carriage 4 to the foremost position, the shiftable stopper for restricting the back position of the same which can be shifted along the screw shaft 14 nearer to and away from the fixed stopper 11, and an encoder 17 adapted to detect a rotation of the screw shaft 14. A signal of such detection is sent to the processing means 20 whereby a moving distance H of the work stock carriage 4 is estimated.

The inputting means 19 is formed, as shown in Fig.4, out of rows of keys fitted onto a panel 10a of the operating unit 10, including ten keys 22, arrow keys 23, a return key 24 and modifying keys 25, 26, 27 for the saw blade thickness, the frequency of forward movement of the carriage and the cutting-off length of the work stock. The displaying means 21 is similarly fitted onto the panel 10a of the operating unit 10, and includes each sections, i.e. one for displaying the saw blade thickness 28, one for displaying the frequency 29 and one for displaying the cutting-off length 30.

More particularly, with reference to Fig.4, a numerical value of the thickness of a saw blade to be used is indicated on the section 28, a numerical value of the frequency is indicated on the section 29, and an existing relative location of the shiftable stopper 12 is indicated on the section 30 for the cutting-off length. Furthermore, setting values each are indicated on right sides of the modifying keys 25, 26, 27, and can be inputted when any one of the corresponding sections for indicating inputting values is put in an active condition with a noticeable area 31. The active area 31 can be changed at a desired object by the arrow keys 23, in which a numerical value input by the ten keys 22 is directly indicated by pushing the return key 24 and fixed by the modifying keys 25,26,27. In this manner, the change in setting values can be realized.

In the indicating device of the present invention, the detection signal from the identifying means 18 is sent to the processing means 20 in which the moving distance H of the work stock carriage 4 is calculated and estimated. The thickness T of the saw blade and the frequency N of forward movement of the carriage are inputted to the input means 19. Accordingly, the processing means 20 calculates and estimates the cutting-off length L of the work stock, based on the moving distance H of the work stock carriage 4 and the inputted saw blade thickness T and frequency N.

In this case, the relationship can be expressed by a following equation;

$$L \text{ (cutting-off length)} = H \text{ (moving distance of the carriage)} - T \text{ (saw blade thickness)}$$

Also, the frequency N of forward movement can be estimated from a following equation;

$$\text{(cutting-off length + saw blade thickness) / max. moving distance} = N'... \text{ remainder}$$

therein, the frequency N = N' in a case where the remainder is 0, and the frequency N = N' + 1 in a case of 0< reminder < max. moving distance.

For example, when the moving distance H of the work stock carriage 4 is 400 mm, the saw blade thickness is 3 mm and the cutting-off length of the work stock carriage 4 is 1000 m, the frequency N of forward movement is 3 times.

When the frequency of forward movement is set to N, the moving distance H of the work stock carriage 4 may be simply multiplied by N. Accordingly, the cutting-off length L can be expressed by a following equation;

$$L \text{ (cutting-off length)} = [\, H \text{ (moving distance)} \times N \text{ (frequency)} \,] - T \text{ (saw blade thickness)}$$

In this manner, the cutting-off length L at the frequency N is estimated without a need of worker's calculation, and its estimated value is indicated on the displaying means 21.

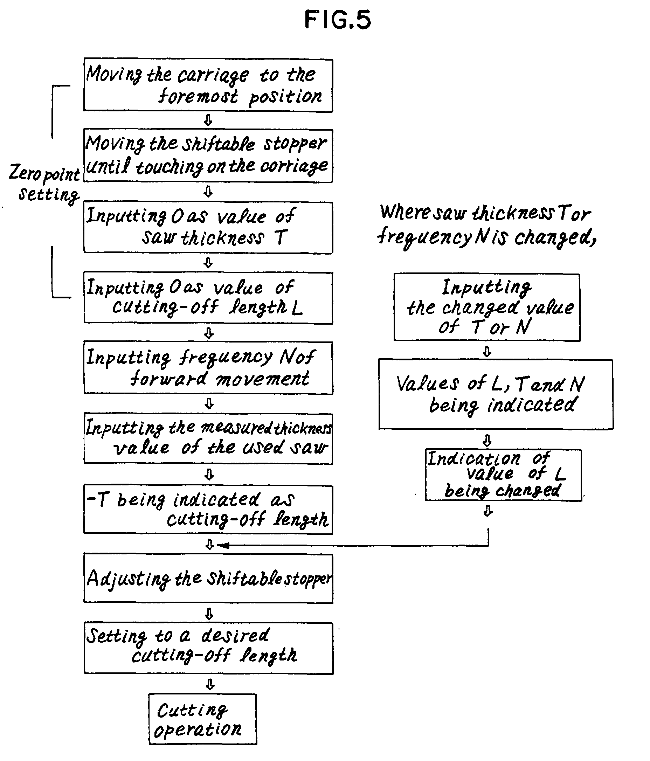

The processes of using the above-constructed indicating device are described hereinafter with reference to a flow chart shown in Fig.5 as well as the other drawing.

Firstly, a zero point is required to set in the indicating device as follows: The work stock carriage 4 (platform 7) is moved forwardly, as shown by a solid line in Fig.2, to the foremost position restricted on the front side by the fixed stopper 11, and then the shiftable stopper 12 is caused to move forwardly to a position to push against the rear edge of the platform 7 of the work stock carriage 4 at the foremost position. In such a condition, 0.00 mm is input as the value of saw blade thickness T, 0.00 mm is input as the value of cutting-off length L, and 0.00 time is input as the value of the frequency N. Such inputting is performed by pushing any of the ten keys 22 of the inputting means 19, so that the numbers of zero are indicated, as shown in Fig.4, on each of the sections 28,29,30 of the displaying means 21, for the saw blade thickness, the frequency, and the cutting-off length, respectively. Therewith the setting of the zero point is accomplished.

Thereafter, the thickness T of the actually used saw blade 2 and the frequency N (e.g. 1) of forward movement of the carriage 4 are input, so that the value -T is indicated on the section 30 for cutting-off length and the value 1 is indicated on the section 29 for frequency. Then, by turning the handle 16 ( see Fig.2), the screw shaft 14 is rotated whereby the shiftable stopper 12 is caused to move rearwardly to a position where a numerical value of the desired cutting-off length L appears on the section 30 for cutting-off length of the displaying means 21, and the stopper 12 being fixed at that position. In such a manner, the cutting operation of the work stock can be performed with the desired cutting-off length L indicated on the section 30 for cutting-off length.

Where another saw blade having a different thickness T is used in replacement, the inputting of a numerical value of the different saw blade thickness is conducted after pushing the actuation key 25 of the inputting means 19 for the saw blade thickness by the ten keys 22, so that the numerical value is indicated on the section 28 for saw blade thickness in the displaying means 21, and an indication on the section 30 for cutting-off length is automatically changed. For example, where another saw blade of 3.50mm in thickness T is used in replacement of the saw blade of 2.50 mm in thickness T by which the work stock is cut with the cutting-off length L of 300.00 mm, the cutting-off length L is changed to 299.00 mm and the value is indicated on the section 30 for cutting-off length. That is, the saw blade thickness T is changed to 3.50 mm from 2.50 mm and the cutting-off length L having a difference 1.00mm is calculated by the processing means 20, and the changed value 299.00 is indicated on the section 30 for cutting-off length.

In this case, for purpose of cutting the forwarded part of the work stock with the same length as the first cutting-off length (300.00 mm), the shiftable stopper 12 may be just moved hackwardly by the difference 1.00 mm between the numerical value 299.00 mm of the cutting-off length indicated on the section 30 for cutting-off length and the first cutting-off length.

Where the frequency N of forward movement is changed, the cutting-off length L is changed automatically in response thereto. In this case, the inputting of a value of the times of the changed frequency is conducted after pushing the actuation key 26 of the inputting means 19 for frequency by the ten keys 22, so that the numerical value is indicated on the section 29 for frequency in the displaying means 21, and an indication on the section 30 for cutting-off length is automatically changed. For example, where the frequency is changed to 2 times from 1 time in use of the saw blade having 2.50 mm in thickness by which the work stock is cut at frequency of one time with the cutting-off length of 300.00 mm, the cutting-off length is changed to 602.50 mm, of which value is calculated and estimated from the equation,

$$L \text{ (cutting-off length)} = [\ H\text{(moving distance of the carriage)} \times N\ ] - T \text{ (saw blade}$$

$$\text{thickness)}.$$

According to the indicating device in the saw machine of the present invention, the moving distance H of the work stock carriage 4 is detected by the identifying means 18, and the cutting-off length L and the moving distance H are calculated and estimated by the processing means 20 based on and the input saw blade thickness T and frequency N, and the numerical value of the cutting-off length L is indicated. Accordingly, where the saw blade thickness T or the frequency N is changed, the new cutting-off length L can be known without a need of the worker's calculation, and where cutting with the same cutting-off length L, a desired cutting-off length can be easily adjusted by moving a back location of the shiftable block while watching the indicated numerical value of the cutting-off length L.

Also, since three values of the cutting-off length L, the saw blade thickness T and the frequency N are indicated, a reliable operation can be secured.

In addition, according to the indicating device of the invention, a revolution of the screw shaft 14 is detected by the encoder 17 in relation to a location of the shiftable stopper 12. The signal of such detection is sent to the processing means 20 for calculation and the moving distance H is indicated on the displaying means 21. Accordingly, the moving distance H of the work stock carriage 4 can be measured accurately and indicated by the displaying means 21.

**Claims**

1.   An indicating device in a saw machine which comprises a work stock carriage (4) adapted for reciprocating one or more times between a foremost position and a shiftable back position and carrying forwardly a work stock (W) partially over a crosswise cutting course of a saw blade (2) whereby a forwarded part of the work stock (W) is cut by the saw blade, said indicating device (21) being designed for use of the saw blades having different thicknesses and comprising

an identifying means (18) for identifying a moving distance (H) of the work stock carriage in between the foremost position and the shiftable back position formed by a fixed stopper (11) for restricting the carriage (4) to the foremost position, a shiftable stopper (12) for restricting the back position of the same (4) which can be shifted along a screw shaft (14) nearer to and away from the fixed stopper by a rotation of the screw shaft, and an encoder (17) adapted to detect the rotation of the screw shaft for conversion into said moving distance in which the work stock carriage is caused to reciprocate one or more times,

an inputting means (19) for inputting numerical values of a thickness (T) of the saw blade and a frequency (N) of forward movement of the work stock carriage;

a processing means (20) for calculating and estimating a cutting-off length of the work stock (W), based on said carriage moving distance identified by the identifiying means (18) according to the input values of the saw blade thickness and the frequency of forward movement of the work stock; and

a displaying means (21) for indicating the saw blade thickness (T), the frequency (N) and the cutting-off length (L) of which the work stock (W) is obtained due to one or more reciprocation of the carriage (4) in the moving distance defined by the foremost position even when the saw blades (2) having different thicknesses are used.

## Patentansprüche

1. Anzeigevorrichtung in einer Sägemaschine, die einen Werkstückschlitten (4) aufweist, welcher zum einmaligen oder mehrmaligen Hin- und Herbewegen zwischen einer vordersten und einer verstellbaren hinteren Position ausgelegt ist und ein Werkstück (W) teilweise über eine kreuzweise Schneidbahn eines Sägeblatts (2) trägt, wobei ein vorgeschobener Teil des Werkstücks (W) durch das Sägeblatt geschnitten wird, wobei die Anzeigevorrichtung (21) für die Verwendung von Sägeblättern, die unterschiedliche Dicken besitzen, ausgelegt ist, und die aufweist:

   eine Bestimmungseinrichtung (18) zum Bestimmen eines Bewegungsabstands (H) des Werkstückschlittens zwischen der vordersten Position und der verstellbaren hinteren Position, die durch einen festen Stopper (11) zum Begrenzen des Schlittens in der vordersten Position bzw. durch einen verstellbaren Stopper (12) zum Begrenzen der hinteren Position desselben (4) gebildet sind, welcher verstellbarer Stopper (12) entlang eines Schraubenschaftes näher zu und weg von dem festen Stopper durch Rotieren des Schraubenschaftes verstellt werden kann, und einen Geber (17), der zum Detektieren der Rotation des Schraubenschaftes zur Umwandlung in den Bewegungsabstand, in welchem der Werkstückschlitten veranlasst wird, sich einmal oder mehrfach hin- und herzubewegen, ausgelegt ist,

   eine Eingabevorrichtung (19) zum Eingeben numerischer Werte einer Dicke (T) des Sägeblatts und einer Frequenz (N) einer Vorwärtsbewegung des Werkstückschlittens;

   eine Verarbeitungseinrichtung (20) zum Berechnen und Abschätzen einer Abschneidlänge des Werkstücks (W) basierend auf dem Schlittenbewegungsabstand, der durch die Bestimmungseinrichtung (18) bestimmt ist, entsprechend den Eingabewerten der Sägeblattdicke und der Frequenz der Vorwärtsbewegung des Werkstücks; und

   eine Anzeigeeinrichtung (21) zum Anzeigen der Sägeblattdicke (T), der Frequenz (N) und der Abschneidlänge (L), aus welchen das Werkstück erhalten wird infolge einer oder mehrerer Hin- und Herbewegungen in dem Bewegungsabstand, der durch die vorderste Position definiert ist, selbst wenn Sägeblätter (2), die unterschiedliche Dicken besitzen, verwendet werden.

## Revendications

1. Dispositif indicateur dans une machine à scier qui comprend un chariot (4) pour matière à scier conçu pour aller et venir une ou plusieurs fois entre une position avant et une position arrière déplaçable et faisant avancer une matière (W) à scier partiellement sur un trajet de coupe transversale d'une lame (2) de scie, grâce à quoi une partie de la matière (W) à scier qui a avancé est coupée par la lame de scie, ledit dispositif indicateur (21) étant conçu pour l'utilisation de lames de scie de différentes épaisseurs et comprenant

   un moyen d'identification (18) pour identifier une distance de course (H) du chariot pour matière à scier entre la position avant et la position arrière déplaçable formée par une butée fixe (11) pour retenir le chariot (4) par rapport à la position avant, une butée déplaçable (12) pour limiter la position arrière du chariot (4) et pouvant se déplacer sur un arbre fileté (14) pour se rapprocher et s'éloigner de la butée fixe par une rotation de l'arbre fileté, et un codeur (17) conçu pour détecter la rotation de l'arbre fileté pour la convertir en distance de course précitée sur laquelle le chariot pour matière à scier est amené à aller et venir une ou plusieurs fois,
   un moyen d'entrée (19) pour entrer des valeurs numériques d'une épaisseur (T) de la lame de scie et une fréquence (N) de course d'avance du chariot pour matière à scier ;

un moyen de traitement (20) pour calculer et estimer une longueur de sectionnement de la matière (W) à scier, sur la base de ladite distance de course du chariot, identifiée par le moyen d'identification (18) selon les valeurs entrées de l'épaisseur de la lame de scie et la fréquence de course d'avance de la matière à scier ; et

un moyen d'affichage (21) pour indiquer l'épaisseur (T) de la lame de scie, la fréquence (N) et la longueur de sectionnement (L) par lesquelles la matière à scier (4) est obtenue du fait d'un ou plusieurs courses de va-et-vient du chariot (4) sur la distance de course définie par la position avant même si on utilise des lames (2) de scie d'épaisseurs différentes.

FIG.1

FIG.2

## FIG.3

Detecting means — 18

Inputting means → Processing means → Displaying means

19      20      21

## FIG.4

21   10a   10   19

28 — Thickness 0.00 mm
29 — Frequency 0 times
30 — Cutting-off length 0.00 mm

Thickness 0.00   Frequency 0   Cutting-off length   0.00

23   22   24

| 7 | 8 | 9 |
| 4 | 5 | 6 |
| 1 | 2 | 3 |
| 0 | · | ↵ |
| C | | |

25   26   27   31   Active area

# FIG.5

Moving the carriage to the foremost position

⇩

Moving the shiftable stopper until touching on the carriage

⇩

*Zero point setting*

Inputting 0 as value of saw thickness T

⇩

Inputting 0 as value of cutting-off length L

⇩

Inputting frequency N of forward movement

⇩

Inputting the measured thickness value of the used saw

⇩

-T being indicated as cutting-off length

⇩

Where saw thickness T or frequency N is changed,

Inputting the changed value of T or N

⇩

Values of L, T and N being indicated

⇩

Indication of value of L being changed

⇩

Adjusting the shiftable stopper

⇩

Setting to a desired cutting-off length

⇩

Cutting operation